# EUROPEAN PATENT APPLICATION

(11) **EP 1 550 364 A2**
(43) Date of publication of application: **06.07.2005**
(21) Application number: 04030988.2
(22) Date of filing: 29.12.2004
(51) Int. Cl.: A01D 34/68

(54) **Variable speed transmission twist-grip throttle control apparatuses and methods for self-propelled mowing machine**

(30) Priority: 05.01.2004 US 751801
(71) Applicant: HONDA MOTOR CO., Ltd., Tokyo (JP)
(72) Inventor: Osborne, Christopher M., Hillsborough, NC 27278 (US)
(74) Representative: Reinhard - Skuhra - Weise & Partner

(57) **Abstract**

Apparatuses and methods are provided for controlling a self-propelled machine, such as a lawn mowing machine, including a housing, an engine attached to the housing, a variable speed transmission, and a twist-grip throttle control. The variable speed transmission can propel the mowing machine, and the twist-grip throttle control can be operatively connected to the variable speed transmission for controlling the variable speed transmission. Self-propelled speed of the mowing machine can therefore be controlled by operating the twist-grip throttle control. The twist-grip throttle control is designed to integrally retain an operator presence control so that only a single control needs to be used by the operator during use of the mowing machine.

## Description

### Technical Field

The subject matter disclosed herein relates generally to apparatuses and methods for controlling operation of self-propelled machines, and more particularly to providing a variable speed transmission twist-grip throttle control for self-propelled machines such as lawn mowing machines.

### Background Art

Self-propelled machines, such as lawn mowing machines and the like, often provide handles on which controls are mounted for engagement and/or manipulation by operators or users of such machines. In particular, a "walk behind" type, self-propelled mowing machine typically has a handle extending behind a power plant or other main operative assembly of the machine for gripping by an operator as the operator walks behind the machine during movement thereof in a forward direction. Typically, one or more controls are mounted toward the end of the handle in a convenient location for the user to manipulate while gripping the handle and operating the machine. One such control is the operator presence control or "dead man" control, which generally includes a spring-biased handle which can be grasped by the operator during normal operation of the machine to enable the motor of the machine. If the operator presence control handle is thereafter released, the machine action is rapidly terminated for reasons of safety. Another well-known control is the speed control, which for self-propelled mowing machines is generally connected to a variable speed transmission associated with the engine and controls the speed of the self-propelled traction wheels. These speed controls typically comprise a lever pivotally mounted onto the machine handle such that the speed of the self-propulsion can be controlled by moving the lever back and forth, which often requires the operator to remove one hand from the handle in order to operate the speed control. These independent systems also typically require the operator to control two or more separate functions while operating the machine. Unfortunately, recent marketing research indicates that many consumers of self-propelled machines would prefer a minimum number of control mechanisms requiring manipulation during operation of such machines in order to simplify use of the machines.

Many examples exist of conventional machines that utilize multiple separate controls during the engagement and running of the machine. U.S. Patent No. 4,281,732 to Hoch discloses a lawn mower with a control mechanism for a propelled-drive clutch wherein the control mechanism includes a dead-man control lever which operates to hold a clutch-control lever in a clutch-engage position only when the dead-man control lever is held in a lever holding position. The lawn mower is operated in a manner that upon release of the dead-man control lever, the dead-man control lever automatically moves to a lever-release position which permits the clutch-control lever to automatically move to a clutch-disengaged position. U.S. Patent No. 4,309,862 to Carlson discloses an operator presence control belt that holds in place a throttle control lever wherein the throttle control lever can be moved forward after the operator presence control belt is engaged. A spring loaded detent on the end of the operator presence control belt holds the throttle control lever in an engaged position until the operator presence control is released such that the throttle lever and operator presence control are interlocked.

U. S. Patent No. 4,327,539 to Bricko et al. discloses the use of a single belt to operate both the drive system and the clutch system for outdoor power equipment. The belt is first rotated counter clockwise to cause a hook to catch on a finger of the drive lever, then as the belt is rotated in a clockwise direction the hook causes the drive lever to rotate and a pin engages a recess in the clutch lever to cause the clutch to engage. Yet another patent related to prior operator presence control and drive systems is U.S. Patent No. 4,466,232 to Beugelsdyk et al. which discloses a compact safety control assembly for lawnmowers having a cable actuated clutch between the motor and the blade which includes a dead-man function along with a operating mechanism requiring two distinct steps for engaging the clutch and initiating rotation of the lawnmower blade.

Twist-grip throttle control systems have been used for years in the motorcycle-like vehicle and outboard marine engine fields. For example, U.S. Patent No. 4,019,402 to Leonheart discloses a motorcycle throttle twist-grip control unit that is connected by a Bowden cable to the carburetor of the motorcycle. Likewise, U.S. Patent No. 4,133,193 to Sanada et al. discloses a throttle grip locking device of a motorcycle having at one end of a handle a rotary throttle grip to control the operation of the engine wherein, when the engine is stopped, the throttle grip would be locked so as to be non-rotatable. U.S. Patent No. 4,191,065 to Golobay et al. discloses a twistable type throttle grip assembly especially adapted for use with motorcycle-like vehicles wherein the throttle grip assembly manipulates a single control cable and is normally operational in a first rotational range for controlling the supply of fuel to the vehicles internal combustion engine thereby controlling the vehicle speed.

Regarding the outboard marine motor field, U.S. Patent No. 5,545,064 to Tsunekawa et al. discloses a throttle and transmission control assembly adapted to be mounted on the tiller of an outboard motor for controlling its transmission and throttle wherein both the transmission and throttle controls employ devices that convert rotary into reciprocating motion and which amplify the reciprocating motion so as to permit a compact assembly. U.S. Patent No. 6,093,066 to Isogawa et al. describes an outboard motor throttle and transmission control that employs a Bowden wire mechanism for transmitting control signals from the tiller handle to the engine throttle and transmission control. A twist-grip throttle control and a pivotally supported transmission control are mounted on a tiller arm and are connected by a Bowden wire actuating mechanism to the respective components of an outboard motor. Finally, U.S. Patent Application No. US2001/0046819 to Kawai et al. discloses an outboard motor featuring a compact throttle control and transmission shifting control on a handle connected to a tiller. The throttle control mechanism includes a twist-grip throttle control that is connected to a throttle control shaft that is journalled by a first bearing and a second bearing in a suitable manner for changing the speed of the engine.

Therefore, it would advantageous to employ a twist-grip throttle control that is operatively connected to a variable speed transmission of a self-propelled mowing machine to control the speed of propulsion. The twist-grip throttle control can be used in conjunction with an operator presence control so that a single control can be used by the operator once the engine control and speed systems are engaged.

### Summary

According to one embodiment, a self-propelled mowing machine comprises a housing, an engine attached to the housing, a variable speed transmission, and a twist-grip throttle control. The variable speed transmission propels the self-propelled mowing machine, and the twist-grip throttle control is operatively connected to the variable speed transmission for controlling the variable speed transmission. Self-propelled speed of the machine can therefore be controlled by operating the twist-grip throttle control.

According to another embodiment, a mowing machine comprises a housing having front, rear, upper and lower portions and a handle attached to the rear upper portion of the housing. An engine is attached to the housing for providing power to the mowing machine. The mowing machine further comprises a variable speed transmission, a twist-grip throttle control, a machine control component, an operator presence control and a cutting element disposed within the lower portion of the housing and rotatably coupled to the engine. The variable speed transmission can propel the mowing machine, and the twist-grip throttle control is operatively connected to the variable speed transmission. The machine control component can be used to enable and disable the engine such as through the engagement and disengagement of clutches that drive the engine and/or mower blades, and can be in a variety of other configurations as known to those skilled in the art. The operator presence control is operatively connected to the machine control component for controlling the machine control component.

Methods are also provided for controlling propulsion speed of a self-propelled mowing machine. The methods generally comprise rotating a twist-grip throttle control on a self-propelled lawn mowing machine to control a variable speed transmission on the mowing machine wherein the variable speed transmission controls the propulsion speed of the mowing machine.

It is therefore an object to provide twist-grip throttle control apparatuses and methods for a self-propelled machine, such as a lawn mowing machine.

An object having been stated hereinabove, and which is achieved in whole or in part by the subject matter disclosed herein, other objects will become evident as the description proceeds when taken in connection with the accompanying drawings as best described hereinbelow.

### Brief Description of the Drawings

Figure 1 is a perspective view of a self-propelled mowing machine including an embodiment of a twist-grip throttle control provided in accordance with the subject matter disclosed herein;
Figure 1 B is a side elevation view of the machine illustrated in Figure 1A;
Figure 2A is a perspective view of the upper section of a mowing machine handle illustrating one embodiment of the twist-grip throttle control positioned in the center of the horizontal handle section;
Figure 2B is a perspective view of the upper section of a mowing machine handle illustrating another embodiment of the twist-grip throttle control positioned on the right side of the horizontal handle section;
Figure 2C is a perspective view of the upper section of a mowing machine handle illustrating another embodiment of the twist-grip throttle control positioned on the left side of the horizontal handle section;
Figure 3A is a side elevation view of the upper section of a self-propelled mowing machine handle, illustrating the twist-grip throttle control and the operator presence control, both in a NEUTRAL position;
Figure 3B is a side elevation view of the upper section of a self-propelled mowing machine handle, illustrating the twist-grip throttle control in a NEUTRAL position and the operator presence control in an ENGAGED position;
Figure 3C is a side elevation view of the upper section of a self-propelled mowing machine handle, illustrating the twist-grip throttle control and the operator presence control, both in the ENGAGED position wherein the twist-grip throttle control is rotatably translated to a LOW speed position; and
Figure 3D is a side elevation view of the upper section of a self-propelled machine handle, illustrating the twist-grip throttle control and the operator presence control, both in the ENGAGED position wherein the twist-grip throttle control is rotatably translated to a HIGH speed position.

### Detailed Description

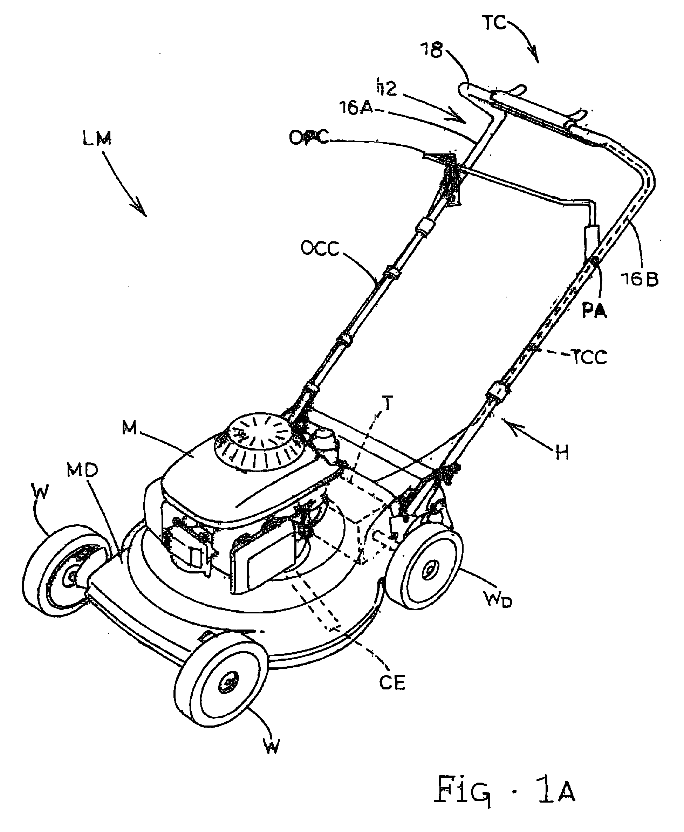

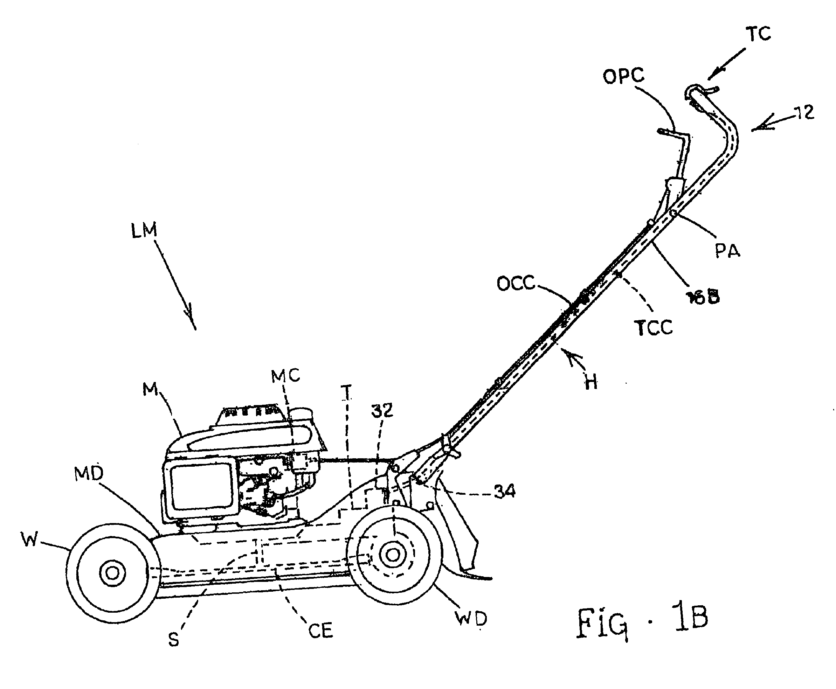

Referring now to Figures 1A and 1B, a self-propelled lawn mowing machine, generally designated **LM**, is illustrated by way of example. Lawnmower **LM** can comprise any suitable configuration generally known to persons skilled in the art or later developed. In the exemplary embodiment, lawnmower **LM** includes a housing such as a mower deck **MD**, which includes front, rear, upper exterior, and lower interior portions. A handle **H** is coupled to the rear portion of mower deck **MD** by any suitable means, and extends upwardly therefrom at an angle appropriate for comfortable grasping and manipulation by an operator. Handle **H** includes a proximal end section generally designated **12**, which is the section farthest away from the main operational components of lawn mower **LM** such as motor **M** and transmission **T**, and which is intended to be gripped by the operator. In one embodiment, proximal end section **12** of handle **H** is generally U-shaped, and thus includes first and second spaced-apart legs **16A** and **16B**, respectively, joined by a central portion **18**.

Mower deck **MD** is supported for rolling movement over a surface by a set of wheels and can include one or more idle (non-driving) wheels, such as wheels **W**, and one or more driving wheels, such as driving wheels **WD**. The embodiment is not limited to which one or more of wheels **W** functions as driving wheel or wheels **WD**, although typically the rearmost wheel or wheels serve this function.

Lawnmower **LM** can also include a powered drive system or assembly. The powered drive system can include a suitable motor **M**, such as an electric motor or an internal combustion engine, and transmission **T**, both of which can be mounted to the upper exterior portion of mower deck **MD** in a suitable manner. As shown in Figure 1B, an output shaft **S** of motor **M** can rotate a suitable cutting element **CE** such as a blade or blades disposed within the lower interior portion of mower deck **MD**. Motor **M** also can transfer power to driving wheels **WD** through transmission **T**, thereby rendering lawnmower **LM** self-propelled in response to control by the operator. Torque from output shaft **S** can, for example, be transferred to an input shaft (not shown) of transmission **T** via an endless belt (not shown). Torque from the input shaft can be transferred to an additional output shaft (e.g., an axle or half-shaft coupled to respective driving wheels **WD**) through an appropriate reducing or transfer means such as a gear set (not shown). In advantageous embodiments, transmission **T** is a variable-speed transmission, and particularly a continuously variable-speed transmission. As appreciated by persons skilled in the art, by providing an appropriate control mechanism further defined herein, an operator can control the output speed of a continuously variable-speed transmission, and thus the speed of driving wheels **WD**, over a continuous or substantially continuous range between a zero or LOW speed and a maximum HIGH speed.

The different types, structures, and functions of the components of lawnmower **LM** just described are generally known to persons skilled in the art, and therefore are not further described.

As illustrated in Figures 1A and 1B and as appreciated by persons skilled in the art, lawnmower **LM** includes an operator presence control **OPC** which is pivotably coupled or attached to handle **H** at a suitable pivot axis **PA** which may comprise an axle, pin, bolt, dowel, or the like. Preferably, operator presence control **OPC** is disposed at or near proximal end section **12** of handle **H** (i.e., the portion of handle **H** proximate to the operator in the course of typical use of lawnmower **LM**) to facilitate manipulation by an operator. As shown in Figure 1B, operator presence control **OPC** communicates with a machine control component **MC** that is designed for enabling and disabling an engine as appreciated by those skilled in the art. Operator presence control **OPC** can communicate with the machine control component **MC** through an operator control cable **OCC**. As appreciated by persons skilled in the art, operator control cable **OCC** can be any suitable elongate component that is either flexible or ridged and capable of transferring a force or actuation by translation and/or a change in tension. A non-limiting example of operator control cable **OCC** may be a cable, such as a Bowden wire, at least a portion of which is typically encased and extended through a coaxial sheath.

As appreciated by persons skilled in the art, operator presence control **OPC** in general is a safety feature that is typically movable between two states, ON and OFF, and typically is biased towards its OFF state. When the operator is operating or manipulating lawnmower **LM** in an intended matter, such as by properly gripping handle **H** and pulling operator presence control **OPC** towards handle **H**, operator presence control **OPC** is in the ON position, and this action translates through the length of operator control cable **OCC** to machine control component **MC**. The ON position permits machine control component **MC** to activate motor **M** and cutting element **CE** and permits lawnmower **LM** to be propelled using the power generated by motor **M** as transferred by transmission **T.** When, on the other hand, the operator is not operating or manipulating lawnmower **LM** in an intended matter, such as by releasing or failing to properly grip operator presence control **OPC,** the operator presence control **OPC** is in the OFF position. The OFF position disables machine control component **MC** and therein disables motor **M,** cutting element **CE,** and/or transmission **T.** In some embodiments and as known to those of skill in the art, a biasing mechanism (not shown) can be employed to bias operator presence control **OPC** to the OFF position. For example, operator control cable **OCC** could be biased at some point along its length to maintain a force that tends to pull operator presence control **OPC** away from handle **H** to the angled OFF position. As another example, a biasing force could be applied to machine control component **MC** and transferred through operator control cable **OCC** to yield the same result.

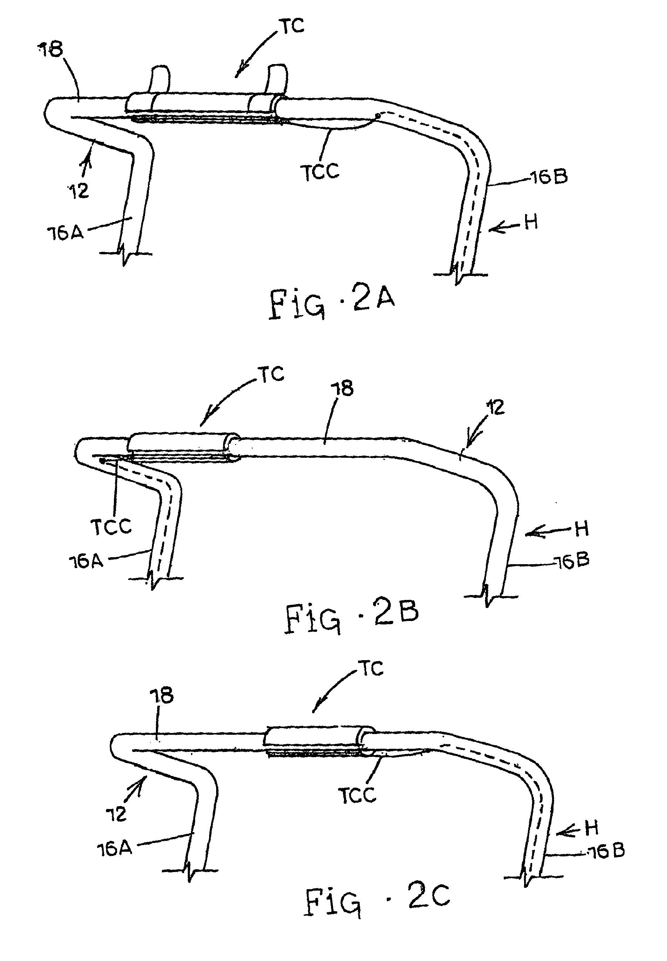

As illustrated in Figures 1A and 1B, lawnmower **LM** further includes a twist-grip throttle control generally designated **TC**. Twist-grip throttle control **TC** is rotatably coupled or attached to handle **H** and can be disposed at or near a proximal end section **12** of handle **H**. As shown in Figure 2A, twist-grip throttle control **TC** can be mounted substantially coaxial in the center of central portion **18** of upper section **12** of handle **H** and be of any suitable and desirable width. Alternatively and as depicted in Figures 2B and 2C, twist-grip throttle control **TC** can be coupled to the right or left side of central portion **18** of upper end section **12** of handle **H** and be of any suitable and desirable width.

Twist-grip throttle control **TC** communicates with transmission **T** through a transmission control cable **TCC**, which similar to the operation control cable **OCC**, can be any suitable elongate component capable of transferring a force or actuation by translation and/or a change in tension (i.e., a Bowden wire). As known to those skilled in the art, transmission control cable **TCC** may be run from twist-grip throttle control **TC** to transmission **T** on the outside of handle **H** typically encased and extended through a coaxial sheath, may be run on the inside of handle **H** as shown in Figures 1A and 1B, or may be run with portions of transmission control cable **TCC** on both the inside and outside of handle **H**.

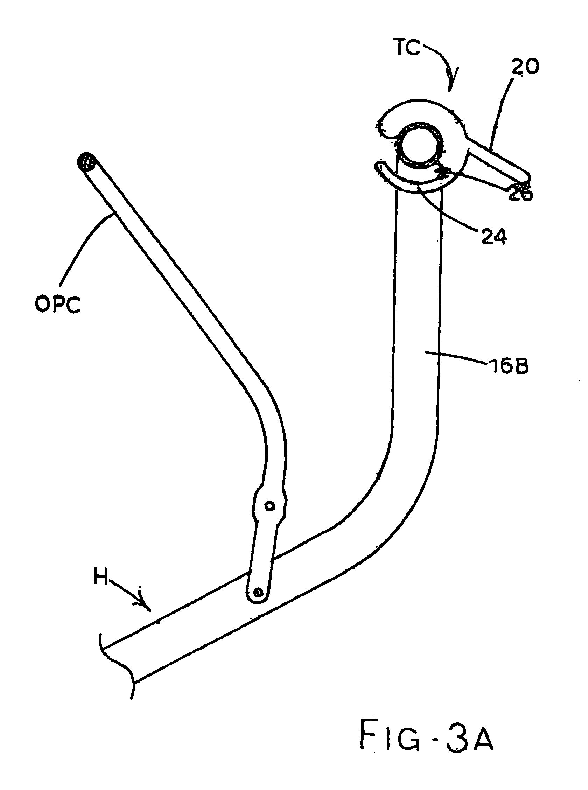

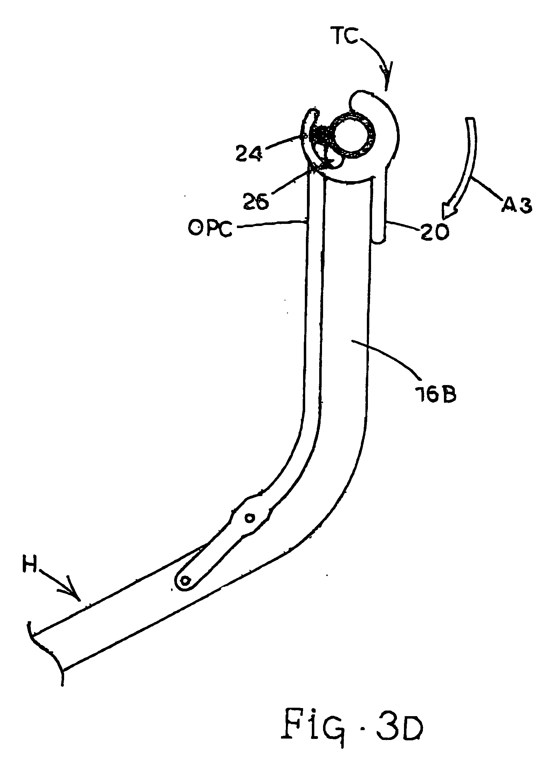

Referring now to Figures 3A - 3D, twist-grip throttle control **TC** can be cylindrical in shape and can include a hook portion **24** that defines a channel **26**. Hook portion **24** and channel **26** can be designed and adopted to integrally mate with operator presence control **OPC**, the operational function of which will be described in more detail hereinbelow. Twist-grip throttle control **TC** can further include one or more tabs or engagement portions **20**. Engagement portions **20** can be essentially elongated tabs fused preferably to opposing ends of twist-grip throttle control **TC**, providing a surface which the operator can push with one or more of the operator's thumbs in order to rotate the twist-grip throttle control **TC** through the range of operational states.

As appreciated by persons skilled in the art, actuation and the position of twist-grip throttle control **TC** can determine the speed at which lawnmower **LM** is self-propelled, and thus is movable between a NEUTRAL state at which the speed of lawnmower **LM** can be zero, a LOW state at which the speed of lawnmower **LM** can be a low speed, and a HIGH state at which the speed of lawnmower **LM** can be at a maximum operating speed, and often is movable to intermediate states between the LOW and HIGH states. In a preferred embodiment, twist-grip throttle control **TC** can rotate from approximately 90 degrees to approximately 180 degrees when rotating between a NEUTRAL state and a HIGH state.

In lawnmowers equipped with continuously variable-speed transmissions, the throttle of motor **M** (when provided as an internal combustion engine) is typically fixed at a constant or substantially constant setting (i.e., the speed of the motor is constant, such as 3100 rpm) during normal cutting operations. Often, this throttle setting corresponds to an optimized motor speed at which components of motor **M** can rotate in a balanced manner with minimal vibration, while maintaining the effectiveness of cutting element **CE**. Nonetheless, as appreciated by persons skilled in the art, provision can be made for adjusting the throttle in special circumstances, such as to a choke setting for improved start-up conditions.

As shown in Figure 1B, due to the normally constant throttle setting, twist-grip throttle control **TC** typically interfaces with transmission **T** through a transmission control component **32** to adjust one or more components thereof. Accordingly, a distal end or end section **34** of transmission control cable **TCC** is illustrated in Figure 1B as being connected to transmission control component **32**, which in turn is integrally attached to transmission **T**. Depending on the particular design of transmission **T**, transmission control component **32** can be mechanically associated with a cam, variable-pitch pulley, dog clutch, cone clutch, friction or pressure plate, gear, fluid control circuit, brake and/or other suitable device as appreciated by persons skilled in the art. The NEUTRAL state of twist-grip throttle control **TC** can correspond to a condition in which such a device decouples power transfer between motor **M** and transmission **T**.

In some embodiments and as appreciated by those skilled in the art, twist-grip throttle control **TC** can be biased to the NEUTRAL position by a biasing mechanism (not shown). For example, transmission control cable **TCC** can be biased at some point along its length to maintain a force that tends to rotate twist-grip throttle control **TC** into the NEUTRAL position. As another example, a biasing force could be applied to transmission control component **32** and transferred through transmission control cable **TCC** to yield the same result.

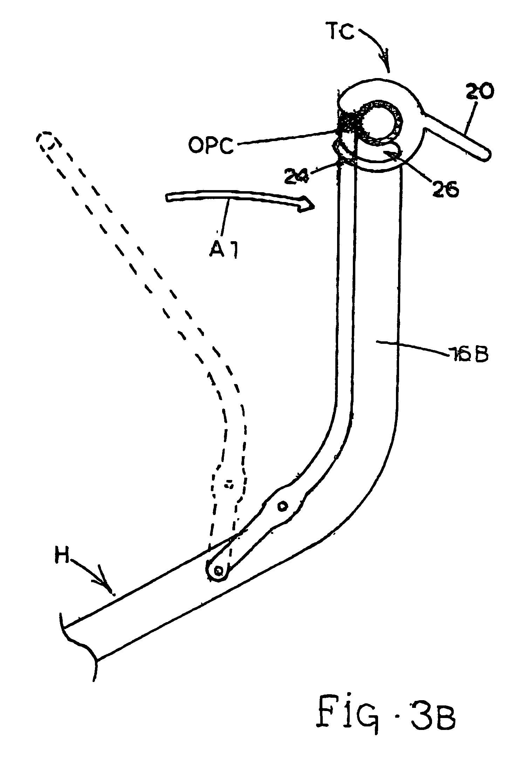

The operation and positioning of twist-grip throttle control **TC** to increase the speed of a lawnmower will now be described, with reference to Figures 3A - 3D. Figure 3A shows the OFF position of lawnmower **LM,** which is the normal position during non-use of lawnmower **LM.** In the OFF position as shown in Figure 3A, operator presence control **OPC** and twist-grip throttle control **TC** can both be in an OFF or NEUTRAL position wherein motor **M** is disabled. Referring now to Figure 3B, to activate motor **M**, such as by cranking an internal combustion engine, the operator first rotates operator presence control **OPC** from the OFF position shown in Figure 3A to the ON position shown in Figure 3B by pulling operator presence control **OPC** towards handle **H** in the direction of arrow **A1**. As shown in Figure 3B, while the operator presence control **OPC** is now in an ON or ENGAGED position, the twist-grip throttle control **TC** remains in a zero speed NEUTRAL position at which no power is transferred by transmission **T** from motor **M** to driving wheels **WD**. Such an embodiment is useful for preventing lawnmower **LM** from jerking forward immediately upon startup. Depending on the type of transmission **T** with which twist-grip throttle control **TC** is interfaced, the zero speed NEUTRAL position can, if desired, involve a physical detachment in the power transmission path between motor **M** and driving wheel **WD** such as the disengagement of a clutch, or a stoppage in rotation of some critical component such as through application of a braking or friction device.

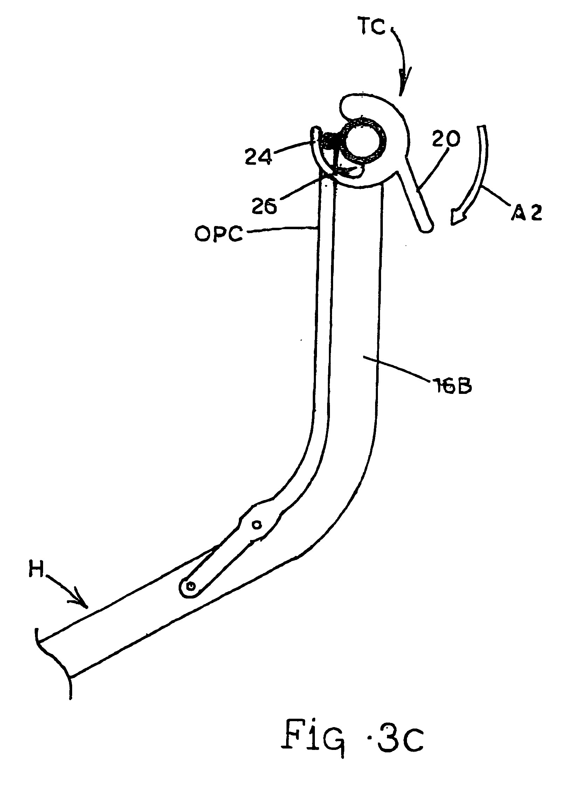

After motor **M** has been activated, and while continuing to hold the operator presence control **OPC** in the ON position to maintain powered operation of lawnmower **LM**, the operator can rotate twist-grip throttle control **TC** in the direction of arrow **A2** as shown in Figure 3C, such that twist-grip throttle control **TC** reaches the engaged LOW speed position shown in Figure 3C. At this point, hook portion **24** of twist-grip throttle control **TC** extends over the horizontal portion of operator presence control **OPC** such that operator presence control **OPC** is now held firmly in position against handle **H**. With twist-grip throttle control **TC** in this extreme LOW speed position, power is transferred by transmission **T** from motor **M** to driving wheel **WD** at the lowest speed available. As shown in Figure 3D, the operator can further rotate twist-grip throttle control **TC** in the direction of arrow **A3** until twist-grip throttle control **TC** reaches the extreme HIGH speed position. While twist grip throttle control **TC** is in the range between the extreme LOW speed position and the extreme HIGH speed position, operator presence control **OPC** can be firmly held against handle **H** by hook portion **24** and channel **26** of twist-grip throttle control **TC**, allowing the operator to control lawnmower **LM** with one control device. The operator can adjust the speed of lawnmower **LM** by rotating twist-grip throttle control **TC** within the linear range of travel between the extreme LOW speed position and the extreme HIGH speed position. Upon completion of mowing activity or in any situation when the lawnmower must be disabled immediately, the operator can merely release twist-grip throttle control **TC** and twist-grip throttle control **TC** will rotate back from an extreme HIGH speed position to the extreme LOW speed position and further to the NEUTRAL position. Once twist-grip throttle control **TC** passes through the extreme LOW speed position, hook portion **24** will release operator presence control **OPC** and operator presence control **OPC** will return to its NEUTRAL position, thus disabling motor **M**.

As can be appreciated by those skilled in the art, any conventional structure can be used for twist-grip throttle control **TC**. For example, U.S. Patent No. 4,019,402 to Leonheart, U.S. Patent No. 4,133,193 to Sanada et al., and U.S. Patent No. 4,191,065 to Golobay et al. each disclose twist-grip throttle control units used in the motorcycle-like vehicle art area. Likewise, U.S. Patent No. 5,545,064 to Tsunekawa et al., U.S. Patent No. 6,093,066 to Isogawa et al., and U.S. Patent Application No. US2001/0046819 to Kawai et al. each disclose twist-grip throttle control units used in the outboard marine motor field. Twist-grip throttle control **TC** as disclosed herein can comprise any suitable structure or combination of structures from the twist-grip throttle control units of these individual patents, which are hereby incorporated by reference, or the structure of any twist-grip throttle unit known by those of skill in the art.

It will be understood that various details of the disclosed subject matter may be changed without departing from the scope of the disclosed subject matter. Furthermore, the foregoing description is for the purpose of illustration only, and not for the purpose of limitation.

## Claims

1. A self-propelled mowing machine comprising:
(a) a housing;
(b) an engine attached to the housing;
(c) a variable speed transmission for propelling the self-propelled mowing machine; and
(d) a twist-grip throttle control operatively connected to the variable speed transmission for controlling the variable speed transmission whereby self-propelled speed of the self-propelled mowing machine can be controlled by operating the twist-grip throttle control.

2. The self-propelled mowing machine according to claim 1 wherein the twist-grip throttle control is rotatable between a neutral position and an engaged position.

3. The self-propelled mowing machine according to claim 2 wherein the engaged position engages the variable speed transmission.

4. The self-propelled mowing machine according to claim 3 wherein the twist-grip throttle control is further rotatable in the engaged position between a low position at which the variable speed transmission is set to a minimum speed and a high position at which the variable speed transmission is set to a maximum speed.

5. The self-propelled mowing machine according to claim 1 further comprising:
(a) a machine control component for enabling and disabling the engine; and
(b) an operator presence control operatively connected to the machine control component for controlling the machine control component whereby enabling and disabling of the engine can be controlled by operating the operator presence control.

6. The self-propelled mowing machine according to claim 5 wherein the operator presence control is translatable between a neutral or off position and an engaged or on position.

7. The self-propelled mowing machine according to claim 6 wherein the engaged position enables the machine control component and wherein the neutral position disables the machine control component.

8. The self-propelled mowing machine according to claim 6 wherein the twist-grip throttle control further comprises a grooved portion wherein the operator presence control is retained in an engaged position when the twist-grip throttle control is retained in an engaged position.

9. The self-propelled mowing machine according to claim 1 further comprising a handle attached to the housing.

10. The self-propelled mowing machine according to claim 9 wherein the twist-grip throttle control is substantially coaxial with a portion of the handle.

11. The self-propelled mowing machine according to claim 10 wherein the twist-grip throttle control further comprises at least one engagement portion to rotate the twist-grip throttle control.

12. The self-propelled mowing machine according to claim 11 wherein the twist-grip throttle control comprises two engagement portions on opposing ends of the twist-grip throttle control.

13. The self-propelled mowing machine according to claim 10 wherein the twist-grip throttle control is rotatable through an arc of 90 degrees.

14. The self-propelled mowing machine according to claim 13 wherein the twist-grip throttle control is rotatable from approximately 90 degrees to approximately 180 degrees.

15. A mowing machine comprising:
(a) a housing having front, rear, upper and lower portions;
(b) a handle attached to the rear upper portion of the housing;
(c) an engine attached to the housing;
(d) a variable speed transmission for propelling the mowing machine;
(e) a twist-grip throttle control substantially coaxial with a portion of the handle and operatively connected to the variable speed transmission for controlling the variable speed transmission whereby self-propelled speed of the mowing machine can be controlled by operating the twist-grip throttle control;
(f) a machine control component for enabling and disabling the engine;
(g) an operator presence control operatively connected to the machine control component for controlling the machine control component whereby enabling and disabling of the engine can be controlled by operating the operator presence control; and
(h) a cutting element disposed within the lower portion of the housing and rotatably coupled to the engine.

16. A method of controlling propulsion speed of a self-propelled mowing machine comprising:
(a) rotating a twist-grip throttle control on a self-propelled mowing machine to control a variable speed transmission on the self-propelled mowing machine whereby the variable speed transmission controls the propulsion speed of the self-propelled mowing machine.

17. The method according to claim 16 wherein rotating the twist-grip throttle control increases and decreases the propulsion speed of the self-propelled mowing machine.
